# EUROPÄISCHE PATENTSCHRIFT

(11) **EP 3 887 740 B1**
(45) Veröffentlichungstag und Bekanntmachung des Hinweises auf die Patenterteilung: **07.12.2022**
(21) Anmeldenummer: 19789940.4
(22) Anmeldetag: 15.10.2019
(51) Int. Cl.: F27D 3/16, C21C 5/46, C21C 5/52, C21C 7/00, F27D 3/18, F27D 99/00

(54) **INJEKTORVORRICHTUNG UND VERFAHREN ZUM EINBLASEN VON FESTSTOFFEN IN EIN METALLURGISCHES AGGREGAT**
INJECTOR APPARATUS AND METHOD FOR BLOWING SOLIDS INTO A METALLURGICAL ASSEMBLY
DISPOSITIF D'INJECTEUR ET MÉTHODE POUR L'INSUFFLATION DE SOLIDES DANS UN AGRÉGAT MÉTALLURGIQUE

(30) Priorität: 26.11.2018 DE 102018220217
(43) Veröffentlichungstag der Anmeldung: 06.10.2021
(73) Patentinhaber: SMS Group GmbH, 40237 Düsseldorf (DE)
(72) Erfinder: NIEKAMP, Mark, 42699 Solingen (DE); MELLINGHOFF, Ben, 41068 Mönchengladbach (DE); STARKE, Peter, 47228 Duisburg (DE)
(74) Vertreter: Kross, Ulrich
(86) Internationale Anmeldenummer: PCT/EP2019/077970
(87) Internationale Veröffentlichungsnummer: WO 2020/108841

(56) Entgegenhaltungen:
- DE-B1- 1 646 653
- US-A- 4 434 005
- US-A1- 2016 238 320
- US-B1- 6 355 205

## Beschreibung

### Technisches Gebiet

Die Erfindung betrifft eine Injektorvorrichtung und ein Verfahren zum Einbringen eines Feststoffs, vorzugsweise in Form eines pulverförmigen Materials, in ein metallurgisches Aggregat, etwa in ein Schmelzgefäß eines Elektrolichtbogenofens oder Reduktionsofens.

### Hintergrund der Erfindung

Es sind Injektoren zum Einblasen von sauerstoffreichen Gasen in ein metallurgisches Aggregat, wie beispielsweise in ein Schmelzgefäß eines Elektrolichtbogenofens, bekannt. Das Einblasen von Gasen dient der pyrometallurgischen Behandlung von Metallen, Metallschmelzen und/oder Schlacken in einem solchen Aggregat. Der Injektor erzeugt zu diesem Zweck einen Hochgeschwindigkeitsgasstrahl aus einem Sauerstoffgemisch und einen entzündbaren Strahl aus einem Brenngas- /Luftgemisch, beispielsweise mit dem Ziel, die Metallschmelze zu entkohlen und gleichzeitig eine reaktionsfähige, schützende Schaumschlackenschicht über der Metallschmelze aufzubauen. Ferner dienen solche Injektoren auch dazu, durch das gezielte Einbringen chemischer Energie in Form brennbarer Gase den anfänglich im Schmelzgefäß vorhandenen Schrott aufzuschmelzen.

Injektoren der obigen Art sind beispielsweise in der WO 2015/004182 A1 und WO 2015/051966 A1 beschrieben.

Neben dem Einblasen sauerstoffreicher Gase ist ebenfalls bekannt, Feststoffe, wie etwa pulverförmige Materialien, über entsprechende Injektoren in eine Metallschmelze einzubringen. Beispielsweise kann teilchenförmiger Kohlenstoff in einen Ofen injiziert werden, um die Vergütung der einzuschmelzenden Metalle zu regulieren. Feststoffe werden üblicherweise mittels eines Trägergases in das metallurgische Gefäß eingeblasen.

Ein Injektor zum Einblasen von Feststoffpartikeln in eine Metallschmelze ist beispielsweise in der DE 603 01 347 T2 beschrieben.

Bei Feststoffinjektoren kann es vorkommen, dass das die Feststoffe transportierende Rohr verstopft. Ein zuverlässiges Freihalten der Injektoröffnung ist insbesondere in einem Edelstahlofen nur schwer möglich. Zudem ist das Rohr aufgrund der abrasiven Feststoffe einem hohen Verschleiß ausgesetzt.

### Darstellung der Erfindung

Eine Aufgabe der Erfindung besteht darin, eine verbesserte Injektorvorrichtung und ein verbessertes Verfahren zum Einbringen eines Feststoffs in ein metallurgisches Aggregat bereitzustellen.

Gelöst wird die Aufgabe mit einer Injektorvorrichtung mit den Merkmalen des Anspruchs 1 sowie einem Verfahren mit den Merkmalen des Anspruchs 8. Vorteilhafte Weiterbildungen folgen aus den Unteransprüchen, der folgenden Darstellung der Erfindung sowie der Beschreibung bevorzugter Ausführungsbeispiele.

Die erfindungsgemäße Injektorvorrichtung ist eingerichtet, um einen Feststoff in Form eines pulverförmigen Materials in ein metallurgisches Aggregat einzubringen. Als Feststoff kommen beispielsweise Kalk-, Kohle-, FeSi- oder Aluminiumpartikel in Frage. Auch wenn der sprachlichen Einfachheit halber zumeist von einem "Feststoff" oder "pulverförmigen Material" im Singular die Rede ist, sind Mischungen verschiedener Feststoffe selbstverständlich umfasst. Das metallurgische Aggregat weist vorzugsweise ein Schmelzgefäß auf und ist beispielsweis als Elektrolichtbogenofen oder Reduktionsofen ausgeführt.

Die Injektorvorrichtung gemäß der Erfindung weist eine Feststoffdüse auf, die eingerichtet ist, um einen Strahl aus dem Feststoff und einem Transportmedium zu erzeugen. Das Transportmedium ist vorzugsweise ein Trägergas zum Einblasen des Feststoffs, etwa ein unter Druck stehendes Gas, beispielsweise Druckluft oder Stickstoff. Der Feststoff-/Transportmediumstrahl wird durch eine Austrittsöffnung der Feststoffdüse ausgegeben und auf diese Weise in das metallurgische Aggregat eingebracht bzw. eingeblasen. Die Injektorvorrichtung weist ferner einen die Feststoffdüse zumindest teilweise, vorzugsweise konzentrisch, umgebenden Hüllgaskanal auf, der eingerichtet ist, um einen Strahl aus einem entzündbaren Hüllgas zu erzeugen und aus einer ringförmigen Austrittsöffnung des Hüllgaskanals auszugeben, so dass dieser den Feststoff-/Transportmediumstrahl nach dem Austritt aus der Feststoffdüse zumindest teilweise umhüllt. Das Hüllgas ist beispielsweise ein Erdgas-/Luftgemisch.

Erfindungsgemäß weist die Injektorvorrichtung eine Zündeinrichtung auf, die eingerichtet ist, um das Hüllgas im Hüllgaskanal, d.h. im Innern der Injektorvorrichtung, zu entzünden.

Das Hüllgas kombiniert somit auf synergetische Weise a) eine Stütz- und Konvergenzfunktion des eingeblasenen Feststoffs und b) eine Funktion zum Freihalten der Austrittsöffnung der Feststoffdüse der Injektorvorrichtung. Mit "Stütz- und Konvergenzfunktion" ist gemeint, dass das Hüllgas einer unkontrollierten Divergenz des Feststoff-/Transportmediumstrahls entgegenwirkt, wodurch der eingeblasene Feststoff kontrollierter und effektiver an den Bestimmungsort gebracht werden kann. Die beiden technischen Beiträge a) und b) werden zudem durch das frühe Entzünden des Hüllgases im Innern der Injektorvorrichtung durch einen minimalen Medienverbrauch, somit energie- und ressourcenschonend erzielt.

Vorzugsweise weist die Zündeinrichtung eine Zündkerze und/oder Zündelektrode und/oder einen Piezozünder auf, wodurch das Hüllgas auf baulich kompakte und zuverlässige Weise entzündet werden kann. Der funkengebende Abschnitt der Zündeinrichtung befindet sich vorzugsweise in einer Zündkammer, die einen gegenüber umgebenden Bereichen des Hüllgaskanals erweiterten Querschnitt aufweist.

Vorzugsweise weist die Injektorvorrichtung zumindest zwei Hüllgasanschlüsse auf, beispielsweise zum Zuführen verschiedener Komponenten des Hüllgases in den Hüllgaskanal. Die Bereitstellung mehrerer Hüllgasanschlüsse erlaubt das Zuführen und Vermischen mehrerer Gaskomponenten direkt im Hüllgaskanal. Somit lassen sich kritische Komponenten so spät wie möglich zusammenführen, wodurch sich die Betriebssicherheit der Injektorvorrichtung verbessern lässt. Beispielsweise können im Fall eines Erdgas-/Luftgemischs das Erdgas und die Luft getrennt über einen jeweiligen Hüllgasanschluss zugeführt und dosiert werden.

Erfindungsgemäß weist die Feststoffdüse einen Rohrabschnitt auf, der einen konvergenten und in Strömungsrichtung sich daran anschließenden divergenten Bereich, wodurch die Feststoffdüse als Lavaldüse ausgebildet ist, aufweist. Auf diese Weise lässt sich das gasförmige Transportmedium auf Überschallgeschwindigkeit beschleunigen, wodurch ein besonders gezieltes und tiefes Einbringen der Feststoffe in die Metallschmelze realisierbar ist.

Da die Feststoffdüse durch den Transport der Feststoffe hohen abrasiven Kräften ausgesetzt ist, besteht diese Vorzugsweise zumindest abschnittsweise aus einem verschleißfesten Material und/oder ist im Inneren, d.h. auf den Flächen, die mit dem Feststoff in Kontakt kommen, mit einem verschleißfesten Material beschichtet. Alternativ oder zusätzlich kann die Feststoffdüse auswechselbar eingerichtet sein.

Vorzugsweise befinden sich die Austrittsöffnung des Hüllgaskanals und die Austrittsöffnung der Feststoffdüse in Längsrichtung der Injektorvorrichtung im Wesentlichen an derselben Position. Hierdurch wird am Ausgang des Hüllgaskanals, somit im Bereich der Austrittsöffnung der Feststoffdüse, eine Flamme erzeugt, die mit entsprechend hoher Temperatur und hohem Impuls besonders wirksam einer Verstopfung der Feststoffdüse entgegenwirkt.

Vorzugsweise weist der Hüllgaskanal zwischen der Zündeinrichtung und der Austrittsöffnung einen konvergenten Abschnitt, der als Lavalabschnitt ausgeführt sein kann, auf, wodurch sich der Gasverbrauch weiter minimieren lässt.

Vorzugsweise weist die Injektorvorrichtung eine Kühlung mit einem oder mehreren Kühlkanälen auf, die sich zumindest teilweise in der Wandung zwischen der Feststoffdüse und dem Hüllgaskanal befinden und eingerichtet sind, um ein Kühlmittel zu transportieren. Als Kühlmittel kommt vorzugsweise Wasser oder ein Kühlmittelgemisch auf Wasserbasis zum Einsatz. Um eine Zirkulation des Kühlmittels durch die Kühlkanäle zu realisieren, kann die Kühlung Kühlmittelanschlüsse aufweisen, über die ein Kühlmittelzulauf und Kühlmittelablauf realisierbar sind. Durch die Kühlung werden besonders temperaturbelastete Bereiche gekühlt, wodurch der Verschleiß der Injektorvorrichtung, insbesondere der Feststoffdüse, weiter verringert wird.

Die obige Aufgabe wird ferner durch ein Verfahren zum Einbringen eines Feststoffs in ein metallurgisches Aggregat mittels einer Injektorvorrichtung gelöst, wobei das Verfahren aufweist: Erzeugen eines Strahls aus dem Feststoff und einem Transportmedium in einer Feststoffdüse der Injektorvorrichtung; Abgeben des Strahls aus dem Feststoff und Transportmedium durch eine Austrittsöffnung der Feststoffdüse in das metallurgische Aggregat; Erzeugen eines Strahls aus einem entzündbaren Hüllgas in einem die Feststoffdüse zumindest teilweise, vorzugsweise konzentrisch, umgebenden Hüllgaskanal, wobei der Hüllgasstrahl nach Ausgabe aus einer ringförmigen Austrittsöffnung des Hüllgaskanals den Strahl aus dem Feststoff und Transportmedium nach Austritt aus der Feststoffdüse zumindest teilweise umhüllt; und Entzünden des Hüllgases im Hüllgaskanal mittels einer Zündeinrichtung.

Es sei darauf hingewiesen, dass die angegebene Reihenfolge der Verfahrensschritte keine zeitliche Ordnung impliziert. Insbesondere findet die Erzeugung des Feststoff-/Transportmediumstrahls und die Erzeugung und Entzündung des Hüllgasstrahls vorzugsweise im Wesentlichen parallel statt, so dass der Feststoff-/Transportmediumstrahl und der Hüllgasstrahl gleichzeitig aus der Injektorvorrichtung ausgegeben werden.

Vorzugsweise weist die Injektorvorrichtung einen Aufbau nach einer der oben dargelegten Ausführungsformen auf.

Der Feststoff umfasst gemäß dem Verfahren ein oder mehrere pulverförmige Materialien, vorzugsweise Kalk- und/oder Kohle- und/oder FeSi- und/oder Aluminiumpartikel. Ferner ist das Transportmedium vorzugsweise ein unter Druck stehendes Gas, etwa Druckluft oder Stickstoff. Das Hüllgas ist vorzugsweise ein Erdgas-/Luftgemisch.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale realisiert werden, insofern sich die Merkmale nicht widersprechen. Die folgende Beschreibung bevorzugter Ausführungsbeispiele erfolgt mit Bezug auf die begleitenden Zeichnungen.

### Kurze Beschreibung der Figuren

Die Figur 1 zeigt einen Längsschnitt durch eine Injektorvorrichtung zum Injizieren eines Feststoffs in ein metallurgisches Aggregat.
Die Figur 2 ist eine dreidimensionale Ansicht der Injektorvorrichtung gemäß der Figur 1.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

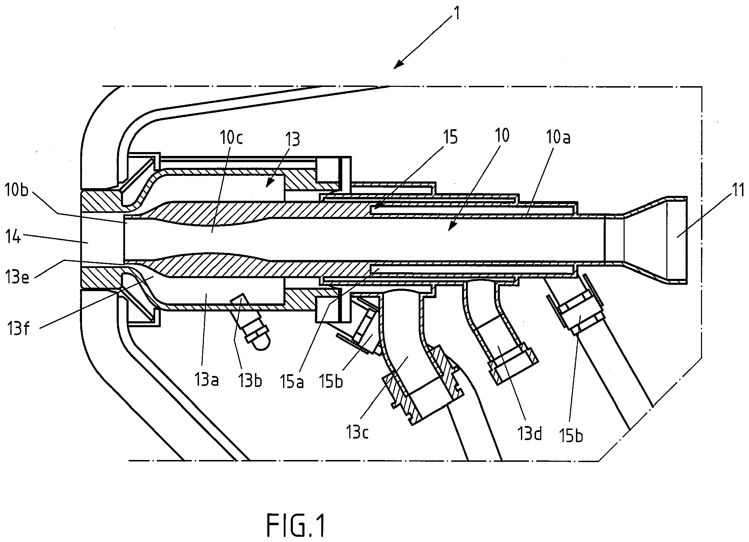

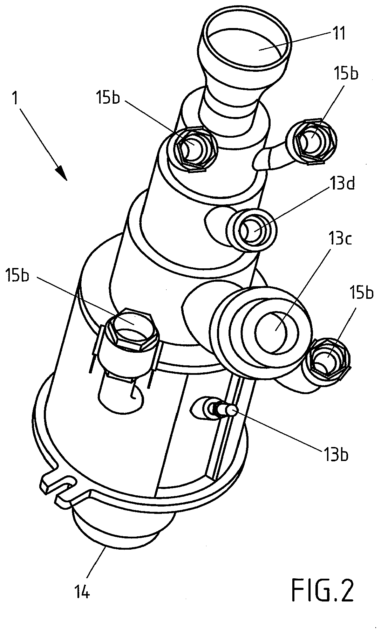

Die Figur 1 zeigt einen Längsschnitt durch eine Injektorvorrichtung 1 zum Injizieren eines Feststoffs in ein metallurgisches Aggregat, das in den Figuren nicht dargestellt ist. Die Figur 2 ist eine dreidimensionale Ansicht der Injektorvorrichtung 1 gemäß der Figur 1.

Die Injektorvorrichtung 1 weist eine Feststoffdüse 10 auf, die einen Rohrabschnitt 10a und eine Austrittsöffnung 10b hat. Die Feststoffdüse 10 bildet vorzugsweise einen zentralen Abschnitt der Injektorvorrichtung 1 aus und definiert eine Längserstreckung bzw. Längsrichtung derselben. Die Feststoffe werden über einen Feststoffanschluss 11, der Teil der Injektorvorrichtung 1 oder ein separates Bauteil sein kann, dem Rohrabschnitt 10a zugeführt. Die Feststoffe werden mittels eines Transportmediums eingeblasen, das beispielsweise ebenfalls über den Feststoffanschluss 11 zugeführt oder darin eingemischt wird. Das Transportmedium ist normalerweise ein unter Druck stehendes Trägergas, wie etwa Druckluft oder Stickstoff. Die Feststoffe umfassen insbesondere pulverförmige Materialien, wie etwa Kalk-, Kohle-, FeSi-, Aluminiumpartikel und dergleichen.

Das Gemisch aus Feststoff und Transportmedium strömt durch den Rohrabschnitt 10a, tritt aus der Austrittsöffnung 10b aus und wird auf diese Weise in das metallurgische Aggregat eingeblasen. Das metallurgische Aggregat dient vorzugsweise zum Einschmelzen metallischer Materialien, wie Schrott, Pellets, Eisenschwamm, Legierungsbestandteilen und dergleichen. Das metallurgische Aggregat weist zu diesem Zweck üblicherweise ein Schmelzgefäß auf und ist beispielsweis als Elektrolichtbogenofen oder Reduktionsofen ausgeführt. Die Injektorvorrichtung 1 ist vorzugsweise so eingerichtet, dass die Feststoffe direkt auf die einzuschmelzenden und/oder geschmolzenen Materialien im Schmelzgefäß aufgeblasen werden.

Die Feststoffdüse 10 kann als Lavaldüse ausgeführt sein. In diesem Fall weist die Feststoffdüse 10 einen konvergenten und in Strömungsrichtung sich anschließenden divergenten Bereich, der hierein als Lavalabschnitt 10c bezeichnet ist, auf. Auf diese Weise lässt sich das gasförmige Transportmedium auf Überschallgeschwindigkeit beschleunigen.

Die Injektorvorrichtung 1 weist ferner einen ringförmigen Hüllgaskanal 13 auf, der die Feststoffdüse 10 zumindest teilweise im Wesentlichen konzentrisch umgibt. In einem Abschnitt des Hüllgaskanals 13, der hierin als Zündkammer 13a bezeichnet ist, ist zumindest eine Zündeinrichtung 13b installiert. Die Zündeinrichtung 13b kann eine Zündkerze, Zündelektrode, ein Piezozünder oder dergleichen sein und ist eingerichtet, um das im Hüllgaskanal 13 befindliche Hüllgas zu entzünden. Zu diesem Zweck wird das Hüllgas über einen oder mehrere, im vorliegenden Ausführungsbeispiel zwei, Hüllgasanschlüsse 13c, 13d in den Hüllgaskanal 13 eingebracht. Die Bereitstellung mehrerer Hüllgasanschlüsse 13c, 13d erlaubt das Zuführen und Vermischen mehrerer Gaskomponenten direkt im Hüllgaskanal 13. Somit lassen sich kritische Komponenten des Hüllgases so spät wie möglich zusammenführen, wodurch sich die Betriebssicherheit der Injektorvorrichtung 1 verbessern lässt. Das Hüllgas ist beispielsweise ein Erdgas-/Luftgemisch.

Nachdem das Hüllgas über die Hüllgasanschlüsse 13c, 13d zugeführt wurde, wird es in der Zündkammer 13a über die Zündeinrichtung 13b entzündet. Im Unterschied zu herkömmlichen Feststoffinjektoren wird das Hüllgas im Fall eines entzündlichen Hüllgases somit nicht erst beim Austritt aus dem Injektor durch die Hitze im Schmelzgefäß entzündet, sondern bereits intern, d.h. im Innern der Injektorvorrichtung 1. Hierdurch wird im Bereich der Austrittsöffnung 13e des Hüllgaskanals 13 eine Flamme erzeugt, die mit entsprechend hoher Temperatur und hohem Impuls die Austrittsöffnung 13e verlässt. Ein wichtiger technischer Beitrag dieser frühen Entzündung besteht darin, dass die Hüllgasflamme die Austrittsöffnung 10b freihält, somit einem Verstopfen der Feststoffdüse 10 durch die Feststoffe entgegenwirkt.

Der Hüllgaskanal 13 weist die oben erwähnte ringförmige Austrittsöffnung 13e auf, die sich in Längsrichtung der Injektorvorrichtung vorzugsweise an der Position der Austrittsöffnung 10b der Feststoffdüse 10 befindet. So treten das Feststoff- /Transportmediumgemisch und das dieses im Wesentlichen koaxial umhüllende, entzündete Hüllgas aus einer gemeinsamen Austrittsöffnung 14 der Injektorvorrichtung 1 aus.

Das Hüllgas kombiniert auf synergetische Weise a) eine Stütz- und Konvergenzfunktion der eingeblasenen Feststoffe und b) eine Funktion zum Freihalten der Austrittsöffnung 10b der Feststoffdüse 10. Mit "Stütz- und Konvergenzfunktion" ist gemeint, dass das Hüllgas einer unkontrollierten Divergenz des Feststoff-/Transportmediumstrahls entgegenwirkt, wodurch die eingeblasenen Feststoffe kontrollierter und effektiver an den Bestimmungsort gebracht werden können. Die beiden technischen Beiträge a) und b) werden durch das frühe Entzünden des Hüllgases durch einen minimalen Medienverbrauch, somit energie- und ressourceneffizient erzielt.

Um die obigen technischen Wirkungen zu optimieren, kann der Hüllgaskanal 13 speziell gestaltet sein. So schließt sich im Ausführungsbeispiel der Figur 1 an die Zündkammer 13a in Strömungsrichtung ein konvergenter Abschnitt 13f an, der als Lavalabschnitt ausgeführt sein kann. Somit lässt sich der Gasverbrauch minimieren.

Die Feststoffdüse 10 ist durch den Transport der Feststoffe hohen abrasiven Kräften ausgesetzt. Die Feststoffdüse 10 besteht aus diesem Grund vorzugsweise vollständig oder zumindest abschnittsweise aus einem verschleißfesten Material und/oder ist im Inneren mit einem verschleißfesten Material beschichtet. Ferner ist die Feststoffdüse 10 vorzugsweise auswechselbar eingerichtet.

Um den Verschleiß der Injektorvorrichtung 1, insbesondere der Feststoffdüse 10 weiter zu verringern, sind die temperaturbelasteten Bereiche vorzugsweise mit einer Kühlung 15 ausgestattet. Diese kann Kühlkanäle 15a in der Wandung zwischen der Feststoffdüse 10 und dem Hüllgaskanal 13 umfassen. Als Kühlmittel kommt vorzugsweise Wasser oder ein Kühlmittelgemisch auf Wasserbasis zum Einsatz. Um eine Zirkulation des Kühlmittels durch die Kühlkanäle 15a zu realisieren, weist die Kühlung 15 ferner Kühlmittelanschlüsse 15b auf, über die ein Kühlmittelzulauf und Kühlmittelablauf realisierbar sind.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen, wie er durch die beigefügten Ansprüche definiert ist.

### Bezugszeichenliste

- 1: Injektorvorrichtung
- 10: Feststoffdüse
- 10a: Rohrabschnitt
- 10b: Austrittsöffnung der Feststoffdüse
- 10c: Lavalabschnitt der Feststoffdüse
- 11: Feststoffanschluss
- 13: Hüllgaskanal
- 13a: Zündkammer
- 13b: Zündeinrichtung
- 13c: Hüllgasanschluss
- 13d: Hüllgasanschluss
- 13e: Austrittsöffnung des Hüllgaskanals
- 13f: Konvergenter Abschnitt
- 14: Gemeinsame Austrittsöffnung
- 15: Kühlung
- 15a: Kühlkanal
- 15b: Kühlmittelanschluss

## Patentansprüche

1. Injektorvorrichtung (1) zum Einbringen eines Feststoffs in der Form eines pulverförmigen Materials in ein metallurgisches Aggregat, die aufweist:
eine Feststoffdüse (10), die eingerichtet ist, um einen Strahl aus dem Feststoff und einem Transportmedium zu erzeugen, durch eine Austrittsöffnung (10b) der Feststoffdüse (10) auszugeben und somit in das metallurgische Aggregat einzubringen;
einen die Feststoffdüse (10) zumindest teilweise, vorzugsweise konzentrisch, umgebenden Hüllgaskanal (13), der eingerichtet ist, um einen Strahl aus einem entzündbaren Hüllgas zu erzeugen und aus einer ringförmigen Austrittsöffnung (13e) des Hüllgaskanals (13) auszugeben, so dass dieser den Strahl aus dem Feststoff und Transportmedium nach Austritt aus der Feststoffdüse (10) zumindest teilweise umhüllt; und
eine Zündeinrichtung (13b), die eingerichtet ist, um das Hüllgas im Hüllgaskanal (1) zu entzünden;
**dadurch gekennzeichnet, dass**
die Feststoffdüse (10) einen Rohrabschnitt (10a) aufweist, der einen konvergenten und in Strömungsrichtung sich daran anschließenden divergenten Bereich, wodurch die Feststoffdüse (10) als Lavaldüse ausgebildet ist, aufweist.

2. Injektorvorrichtung (1) nach Anspruch 1, **dadurch gekennzeichnet, dass** die Zündeinrichtung (13b) eine Zündkerze und/oder Zündelektrode und/oder einen Piezozünder aufweist.

3. Injektorvorrichtung (1) nach Anspruch 1 oder 2, **dadurch gekennzeichnet, dass** diese ferner zumindest zwei Hüllgasanschlüsse (13c, 13d) aufweist, vorzugsweise zum Zuführen verschiedener Komponenten des Hüllgases in den Hüllgaskanal (13).

4. Injektorvorrichtung (1) nach einem der vorigen Ansprüche, **dadurch gekennzeichnet, dass** die Feststoffdüse (10) zumindest abschnittsweise aus einem verschleißfesten Material besteht und/oder im Inneren mit einem verschleißfesten Material beschichtet ist.

5. Injektorvorrichtung (1) nach einem der vorigen Ansprüche, **dadurch gekennzeichnet, dass** die Austrittsöffnung (13e) des Hüllgaskanals (13) und die Austrittsöffnung (10b) der Feststoffdüse (10) sich in Längsrichtung der Injektorvorrichtung (1) im Wesentlichen an derselben Position befinden.

6. Injektorvorrichtung (1) nach einem der vorigen Ansprüche, **dadurch gekennzeichnet, dass** der Hüllgaskanal (13) zwischen der Zündeinrichtung (13b) und der Austrittsöffnung (13e) einen konvergenten Abschnitt (13f) aufweist.

7. Injektorvorrichtung (1) nach einem der vorigen Ansprüche, **dadurch gekennzeichnet, dass** diese eine Kühlung (15) mit einem oder mehreren Kühlkanälen (15a) aufweist, die sich zumindest teilweise in der Wandung zwischen der Feststoffdüse (10) und dem Hüllgaskanal (13) befinden und eingerichtet sind, um ein Kühlmittel zu transportieren.

8. Verfahren zum Einbringen eines Feststoffs in der Form eines pulverförmigen Materials in ein metallurgisches Aggregat mittels einer Injektorvorrichtung (1), das aufweist:
Erzeugen eines Strahls aus dem Feststoff und einem Transportmedium in einer Feststoffdüse (10) der Injektorvorrichtung (1);
Abgeben des Strahls aus dem Feststoff und Transportmedium durch eine Austrittsöffnung (10b) der Feststoffdüse (10) in das metallurgische Aggregat;
Erzeugen eines Strahls aus einem entzündbaren Hüllgas in einem die Feststoffdüse (10) zumindest teilweise, vorzugsweise konzentrisch, umgebenden Hüllgaskanal (13), wobei der Hüllgasstrahl nach Ausgabe aus einer ringförmigen Austrittsöffnung (13e) des Hüllgaskanals (13) den Strahl aus dem Feststoff und Transportmedium nach Austritt aus der Feststoffdüse (10) zumindest teilweise umhüllt; und
Entzünden des Hüllgases im Hüllgaskanal (13) mittels einer Zündeinrichtung (13b),
**dadurch gekennzeichnet, dass**
die Feststoffdüse (10) einen Rohrabschnitt (10a) aufweist, der einen konvergenten und in Strömungsrichtung sich daran anschließenden divergenten Bereich, wodurch die Feststoffdüse (10) als Lavaldüse ausgebildet ist, aufweist.

9. Verfahren nach Anspruch 8, **dadurch gekennzeichnet, dass** die Injektorvorrichtung einen Aufbau nach einem der Ansprüche 1 bis 8 aufweist.

10. Verfahren nach Anspruch 8 oder 9, **dadurch gekennzeichnet, dass** der Feststoff Kalk- und/oder Kohle- und/oder FeSi- und/oder Aluminiumpartikel umfasst.

11. Verfahren nach einem der Ansprüche 8 bis 10, **dadurch gekennzeichnet, dass** das Transportmedium ein unter Druck stehendes Gas, vorzugsweise Druckluft oder Stickstoff, ist.

12. Verfahren nach einem der Ansprüche 8 bis 11, **dadurch gekennzeichnet, dass** das Hüllgas ein Erdgas-/Luftgemisch ist.

## Claims

1. Injector device (1) for introduction of a solid material in the form of a pulverulent material into a metallurgical unit, which device comprises:
a solid material nozzle (10) arranged to produce a jet of the solid material and a transport medium and to deliver it through an outlet opening (10b) of the solid material nozzle (10) and thus introduce it into the metallurgical unit;
an envelope gas channel (13) which at least partly and preferably concentrically surrounds the solid material nozzle (10) and which is arranged to produce a jet of an ignitable envelope gas and to deliver it from an annular outlet opening (13e) of the envelope gas channel (13) so that this at least partly envelopes the jet of the solid material and transport medium after exit from the solid material nozzle (10); and
an ignition device (13b) arranged to ignite the envelope gas in the envelope gas channel (1);
**characterised in that**
the solid material nozzle (10) comprises a tube section (10a) having a convergent region and a divergent region adjoining in flow direction, whereby the solid material nozzle (10) has the configuration of a Laval nozzle.

2. Injector device (1) according to claim 1, **characterised in that** the ignition device (13b) comprises an ignition plug and/or an ignition electrode and/or a piezo igniter.

3. Injector device (1) according to claim 1 or 2, **characterised in that** this further comprises at least two envelope gas connections (13c, 13d), preferably for feeding different components of the envelope gas to the envelope gas channel (13).

4. Injector device (1) according to any one of the preceding claims, **characterised in that** the solid material nozzle (10) at least in a section consists of a wear-resistant material and/or is coated in the interior with a wear-resistant material.

5. Injector device (1) according to any one of the preceding claims, **characterised in that** the outlet opening (13e) of the envelope gas channel (13) and the outlet opening (10b) of the solid material nozzle (10) are present at substantially the same position in longitudinal direction of the injector device (1).

6. Injector device (1) according to any one of the preceding claims, **characterised in that** the envelope gas channel (13) has a convergent section (13f) between the ignition device (13b) and the outlet opening (13e).

7. Injector device (1) according to any one of the preceding claims, **characterised in that** this comprises cooling means (15) with one or more cooling channels (15a), which are present at least in part in the wall between the solid material nozzle (10) and the envelope gas channel (13) and are arranged to transport a coolant.

8. Method for introducing a solid material in the form of a pulverulent material into a metallurgical unit by means of an injector device (1), which method comprises:
producing a jet of the solid material and a transport medium in a solid material nozzle (10) of the injector device (1);
delivering the jet of the solid material and transport medium through an outlet opening (10b) of the solid material nozzle (10) to the metallurgical unit;
producing a jet of an ignitable envelope gas in an envelope gas channel (13) which at least partly and preferably concentrically surrounds the solid material nozzle (10), wherein the envelope gas jet after delivery from an annular outlet opening (13e) of the envelope gas channel (13) at least partly envelopes the jet of the solid material and transport medium after exit from the solid material nozzle (10); and
igniting the envelope gas in the envelope gas channel by means of an ignition device (13b);
**characterised in that**
the solid material nozzle (10) comprises a tube section (10a) having a convergent region and a divergent region adjoining in flow direction, whereby the solid material nozzle (10) has the configuration of a Laval nozzle.

9. Method according to claim 8, **characterised in that** the injector device has a construction according to any one of claims 1 to 8.

10. Method according to claim 8 or 8, **characterised in that** the solid material comprises lime particles and/or carbon particles and/or FeSi particles and/or aluminium particles.

11. Method according to any one of claims 8 to 10, **characterised in that** the transport medium is a gas under pressure, preferably compressed-air or nitrogen.

12. Method according to any one of claims 8 to 11, **characterised in that** the envelope gas is a mixture of natural gas and air.

## Revendications

1. Dispositif (1) sous la forme d'un injecteur qui est destiné à incorporer une substance solide sous la forme d'une matière pulvérulente dans un agrégat métallurgique, qui présente :
une buse (10) qui est destinée à une substance solide, qui est conçue : pour générer un faisceau constitué par la substance solide et par un milieu de transport ; pour distribuer le faisceau en question à travers une ouverture d'évacuation (10b) de la buse (10) qui est destinée à une substance solide ; et pour ainsi l'incorporer dans l'agrégat métallurgique ;
un canal (13) qui est destiné à un gaz faisant office d'enveloppe, qui entoure au moins en partie, de préférence de manière concentrique, la buse (10) qui est destinée à une substance solide, qui est conçu pour générer un faisceau constitué par un gaz inflammable faisant office d'enveloppe et pour distribuer le gaz en question à partir d'une ouverture d'évacuation (13e) de forme circulaire du canal (13) qui est destiné à un gaz faisant office d'enveloppe, d'une manière telle que le gaz en question entoure, au moins en partie, le faisceau qui est constitué par la substance solide et par le milieu de transport après sa sortie de la buse (10) qui est destinée à une substance solide ; et
un mécanisme d'allumage (13b) qui est conçu pour enflammer le gaz faisant office d'enveloppe dans le canal (1) qui est destiné à un gaz faisant office d'enveloppe ;
**caractérisé en ce que** la buse (10) qui est destinée à une substance solide présente un tronçon tubulaire (10a) qui présente une zone convergente et une zone divergente qui s'y raccorde directement dans la direction d'écoulement, tant et si bien que la buse (10) qui est destinée à une substance solide est réalisée sous la forme d'une buse de Laval.

2. Dispositif (1) sous la forme d'un injecteur conformément à la revendication 1, **caractérisé en ce que** le mécanisme d'allumage (13b) présente une bougie d'allumage et/ou une électrode d'allumage et/ou un allumeur piézoélectrique.

3. Dispositif (1) sous la forme d'un injecteur conformément à la revendication 1 ou 2, **caractérisé en ce que** le dispositif en question présente en outre au moins deux raccords (13c, 13d) qui sont destinés au gaz faisant office d'enveloppe, de préférence dans le but d'acheminer différents composants du gaz faisant office d'enveloppe dans le canal (13) destiné au gaz faisant office d'enveloppe.

4. Dispositif (1) sous la forme d'un injecteur conformément à l'une quelconque des revendications précédentes, **caractérisé en ce que** la buse (10) qui est destinée à une substance solide est constituée, au moins par tronçons, d'une matière qui résiste à l'usure et/ou est enduite, à l'intérieur, d'une matière qui résiste à l'usure.

5. Dispositif (1) sous la forme d'un injecteur conformément à l'une quelconque des revendications précédentes, **caractérisé en ce que** l'ouverture d'évacuation (13e) du canal (13) destiné à un gaz faisant office d'enveloppe et l'ouverture d'évacuation (10b) de la buse (10) qui est destinée à une substance solide se trouvent, dans la direction longitudinale du dispositif (1) sous la forme d'un injecteur, essentiellement dans la même position.

6. Dispositif (1) sous la forme d'un injecteur conformément à l'une quelconque des revendications précédentes, **caractérisé en ce que** le canal (13) destiné à un gaz faisant office d'enveloppe présente un tronçon convergent (13f) entre le mécanisme d'allumage (13b) et l'ouverture d'évacuation (13e).

7. Dispositif (1) sous la forme d'un injecteur conformément à l'une quelconque des revendications précédentes, **caractérisé en ce que** le dispositif en question présente un refroidissement (15) qui comprend un ou plusieurs canaux de refroidissement (15a) qui se trouvent, au moins en partie, dans la paroi qui est disposée entre la buse (10) qui est destinée à une substance solide et le canal (13) destiné à un gaz faisant office d'enveloppe et qui sont conçus pour le transport d'un agent de refroidissement.

8. Procédé destiné à incorporer une substance solide sous la forme d'une matière pulvérulente dans un agrégat métallurgique au moyen d'un dispositif (1) sous la forme d'un injecteur, qui présente le fait de :
générer un faisceau constitué par la substance solide et par un milieu de transport dans une buse (10) qui est destinée à une substance solide, du dispositif (1) sous la forme d'un injecteur ;
distribuer le faisceau qui est constitué par la substance solide et par le milieu de transport à travers une ouverture d'évacuation (10b) de la (10) qui est destinée à une substance solide, dans l'agrégat métallurgique ;
générer un faisceau qui est constitué par un gaz inflammable faisant office d'enveloppe dans un canal (13) destiné à un gaz faisant office d'enveloppe qui entoure la buse (10) qui est destinée à une substance solide, au moins en partie, de préférence de manière concentrique ; dans lequel le faisceau de gaz faisant office d'enveloppe entoure, au moins en partie, après sa sortie en passant par une ouverture d'évacuation (13e) de forme annulaire, du canal (13) destiné à un gaz faisant office d'enveloppe, le faisceau qui est constitué par la substance solide et par le milieu de transport après leur évacuation à partir de la buse (10) qui est destinée à une substance solide ; et
enflammer le gaz faisant office d'enveloppe dans le canal (13) destiné à un gaz faisant office d'enveloppe, au moyen d'un mécanisme d'allumage (13b) ;
**caractérisé en ce que** la buse (10) qui est destinée à une substance solide présente un tronçon tubulaire (10a) qui présente une zone convergente et une zone divergente qui s'y raccorde directement dans la direction d'écoulement, tant et si bien que la buse (10) qui est destinée à une substance solide est réalisée sous la forme d'une buse de Laval.

9. Procédé conformément à la revendication 8, **caractérisé en ce que** le dispositif sous la forme d'un injecteur présente une structure en conformité avec l'une quelconque des revendications 1 à 8.

10. Procédé conformément à la revendication 8 ou 9, **caractérisé en ce que** la substance solide comprend des particules de calcaire et/ou de carbone et/ou de FeSi et/ou d'aluminium.

11. Procédé conformément à l'une quelconque des revendications 8 à 10, **caractérisé en ce que** le milieu de transport représente un gaz qui a été mis sous pression, de préférence de l'air sous pression ou de l'azote.

12. Procédé conformément à l'une quelconque des revendications 8 à 11, **caractérisé en ce que** le gaz faisant office d'enveloppe représente un mélange de gaz naturel et d'air.
